# EUROPÄISCHE PATENTSCHRIFT

(11) **EP 1 768 006 B1**
(45) Veröffentlichungstag und Bekanntmachung des Hinweises auf die Patenterteilung: **11.02.2009**
(21) Anmeldenummer: 06118356.2
(22) Anmeldetag: 03.08.2006
(51) Int. Cl.: G05B 19/418

(54) **Verfahren und Vorrichtung zur Erleichterung der Einstellung von Systemen, bei welchen Objekte bewegt werden**
System and method for facilitating the adjustment of systems, by which objects are moved
Système et méthode pour faciliter le réglage de systèmes, avec lesquels des objets sont bougés

(30) Priorität: 26.09.2005 DE 102005045855
(43) Veröffentlichungstag der Anmeldung: 28.03.2007
(73) Patentinhaber: SIEMENS AKTIENGESELLSCHAFT, 80333 München (DE)
(72) Erfinder: Moritz, Soeren, 91353, Wimmelbach (DE)

(56) Entgegenhaltungen:
- EP-A- 0 949 513
- EP-A- 1 447 770
- DE-A1-9102004 016 32
- US-A1- 2005 149 231
- US-B1- 6 282 455
- RONALD T AZUMA: "A Survey of Augmented Reality" PRESENCE, CAMBRIDGE, MA, US, August 1997 (1997-08), Seiten 1-48, XP002254668 ISSN: 1054-7460
- DANGELMAIER W ET AL: "Virtual and augmented reality support for discrete manufacturing system simulation" COMPUTERS IN INDUSTRY, ELSEVIER SCIENCE PUBLISHERS. AMSTERDAM, NL, Bd. 56, Nr. 4, Mai 2005 (2005-05), Seiten 371-383, XP004884591 ISSN: 0166-3615

## Beschreibung

Die Erfindung betrifft ein Verfahren und eine Vorrichtung zur Erleichterung der Einstellung von Systemen, bei welchen Objekte des Systems oder Objekte vom System bewegt werden.

Bei Systemen im Produktions- und Maschinenbereich, bei welchen Objekte bewegt werden, ist es von hoher Bedeutung, die Bewegungen der Objekte zu überwachen und bei Bedarf einzustellen.

Beispielsweise erfasst bei einer fördertechnischen Produktionsanlage ein Sensor eine auf einem bewegten Paket angebrachte Erkennungsmarke. In Abhängigkeit davon trifft eine Steuereinheit eine Entscheidung, ob das Paket auf dem Förderband verbleibt oder mit Hilfe eines Ausschleusers auf ein weiteres Förderband geschoben wird.

Liegt die Entscheidung, das Paket auf das weitere Förderband zu schieben, nicht rechtzeitig vor, so führt dies zu einem nachteiligen Verhalten der Anlage. Entweder müssen die Bänder gestoppt werden, bis die genannte Entscheidung vorliegt, oder es ist in einem fördertechnischen Umlaufpuffer das Paket ein zweites Mal an dem Ausschleuser vorbeizuführen. In beiden Fällen sind die Produktionskosten erhöht, da der Durchsatz der Anlage erniedrigt ist.

Das vorstehend genannte Problem kann dadurch behoben werden, dass entweder der genannte Sensor weiter vorne am Förderband montiert wird oder die Laufgeschwindigkeit des Förderbandes modifiziert wird.

Weiterhin liegt im Zusammenhang mit Maschinen, innerhalb derer Objekte bewegt werden, die Notwendigkeit einer Kalibrierung vor. Diese Notwendigkeit ist darauf zurückzuführen, dass jede Maschine einer Produktionsserie ein Unikat darstellt.

Auch identisch aufgebaute Förderbänder sind jeweils Unikate. Aufgrund von unterschiedlichen Reibungsfaktoren laufen diese Förderbänder mit wenn auch nur gering unterschiedlichen Laufgeschwindigkeiten. Sind diese Förderbänder in Reihe geschaltet, dann besteht die Notwendigkeit, die Laufgeschwindigkeiten dieser Förderbänder im Sinne eines Gleichlaufes aufeinander abzustimmen. Dies wird bei bekannten Anlagen im Rahmen der Inbetriebnahme der Anlage oder im Rahmen von Wartungsarbeiten durch ein Setzen entsprechender Parameter der Antriebstechnik eingestellt.

Alle vorgenannten Feinabstimmungen von Systemen bzw. Anlagen und Maschinen werden gemäß dem Stand der Technik von einem Techniker vorgenommen, der jeweils notwendige Maßnahmen.ergreift. Entscheidet er sich beispielsweise dafür, die Position eines Sensors an einem Laufband zu verändern, so ist er bei der Ermittlung der korrekten Position auf sein individuelles Geschick und ggf. auch auf Versuchsreihen angewiesen. Dies ist mit entsprechendem Zeitaufwand verbunden und führt auch nur zu einer mehr oder weniger guten Annäherung an die optimale Einstellung.

Auch im Falle einer Parametrierung des Gleichlaufs von Förderbändern ist der Inbetriebnehmer auf Versuchsreihen angewiesen. Er hat im Allgemeinen keine unmittelbaren Informationen darüber, in welchem Maße die Laufgeschwindigkeiten verschiedener Förderbänder voneinander abweichen.

Aus der EP 1 447 770 A2 sind ein Verfahren und eine Vorrichtung zur Visualisierung rechnergestützter Informationen bekannt. Dabei werden zur Verbesserung der Bedienung von Robotern beim Einrichten, Umprogrammieren und Lehren eines von diesem durchzuführenden Arbeitsablaufs auf einem Sichtgerät rechnergenerierte Informationen in einem Bild der realen Umwelt visualisiert, wobei eine Bestimmung von Ort und Ausrichtung des Bildempfangsgerätes erfolgt und wobei dieser Bestimmung entsprechende roboterspezifische Informationen auf dem Sichtgerät dem Bild der realen Umwelt überblendet werden. Bei den roboterspezifischen Informationen handelt es sich um das Arbeiten des Roboters betreffende Informationen, wie insbesondere Informationen zu seinen Betriebs- und Programmdaten, die erfassenden Daten zum Roboter selbst, zu vom Roboter zu handhabenden Werkstücken sowie zu in seinem Bereich befindlichen Hindernissen. Beispielsweise kann zusammen mit einem Bild eines realen Roboters eine computergenerierte Roboter-Arbeitsbahn mit eingeblendeten, alphanumerisch bezeichneten Punkten der Bahn sowie Bahngeschwindigkeiten eingeblendet werden.

Die Aufgabe der Erfindung besteht darin, ein Verfahren und eine Vorrichtung anzugeben, bei denen die oben genannten Nachteile nicht auftreten.

Diese Aufgabe wird durch ein Verfahren mit dem im Anspruch 1 sowie eine Vorrichtung mit den im Anspruch 17 angegebenen Merkmalen gelöst. Vorteilhafte Ausgestaltungen und Weiterbildungen des im Anspruch 1 angegebenen Verfahrens sind Gegenstand der abhängigen Ansprüche 2 - 16.

Die Vorteile der Erfindung bestehen insbesondere darin, dass Systeme, bei denen Objekte bewegt werden, erheblich schneller als beim Stand der Technik in Betrieb genommen werden können. Im Falle des Vorliegens einer Produktionsanlage kann die Produktion wesentlich eher aufgenommen werden als bei bekannten Produktionsanlagen. Beispielsweise kann eine Positionierung von Sensoren oder eine Parametrierung von Laufbändern schneller und zielgerichteter vorgenommen werden. Diese Vorteile der Erfindung werden im Wesentlichen dadurch erreicht, dass dem Anwender der räumliche Zusammenhang zwischen Signalen und Bewegungen angezeigt wird. Durch die Auswertung von Bewegungsvorgängen und Signalen kann dem Anwender beispielsweise direkt im Raum angezeigt werden, wo ein Sensor funktionsgerecht zu platzieren ist.

Weitere vorteilhafte Eigenschaften der Erfindung ergeben sich aus deren beispielhafter Erläuterung anhand der Figuren. Es zeigt
- Figur 1: eine Skizze eines Ausschnitts einer fördertechnischen Anlage,
- Figur 2: eine Skizze eines ersten Beispiels für eine Einblendung aufbereiteter Daten und
- Figur 3: eine Skizze eines zweiten Beispiels für eine Einblendung aufbereiteter Daten.

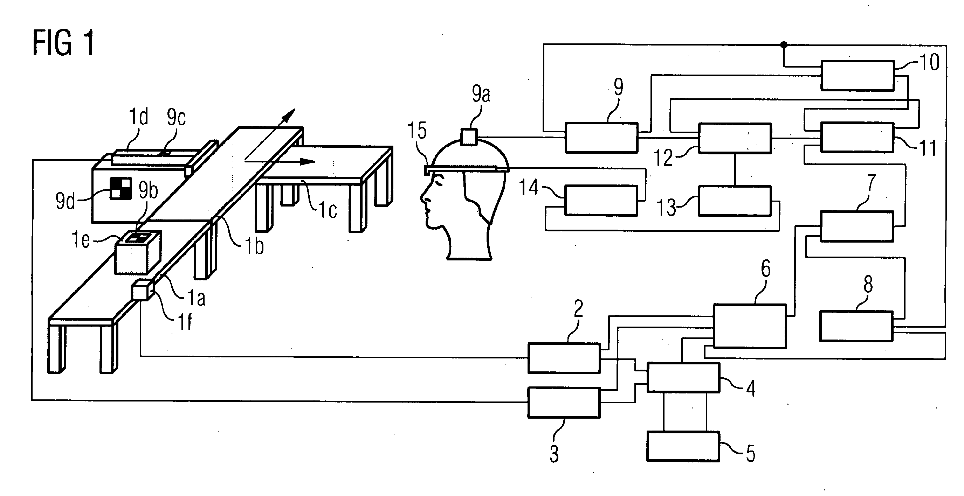

Die Figur 1 zeigt eine Skizze eines Ausschnitts einer fördertechnischen Anlage 1 und einer mit der fördertechnischen Anlage in Verbindung stehenden Vorrichtung, die in Form einer Blockdarstellung gezeigt ist.

Die fördertechnische Anlage 1, die ein Beispiel für ein System darstellt, bei welchem Objekte bewegt werden, weist ein erstes Laufband 1a, ein in Reihe zu diesem angeordnetes zweites Laufband 1b und ein im rechten Winkel zum zweiten Laufband angeordnetes drittes Laufband 1c auf. Auf diesen Laufbändern sollen Objekte transportiert werden. Als Beispiel für ein derartiges Objekt ist in der Figur 1 ein Paket 1e gezeigt.

An einem Rand des ersten Laufbandes 1a ist ein Sensor 1f platziert, dessen Aufgabe darin besteht, ein Sensorsignal an eine Sensorik 2 zu liefern, sobald ein vorlaufendes Paket detektiert wird. Weiterhin ist im Bereich des zweiten Laufbandes 1b ein Ausschleuser 1d angeordnet. Dieser ist dazu vorgesehen, ein auf dem zweiten Laufband 1b vorbeilaufendes Paket vom zweiten Laufband 1b auf das dritte Laufband 1c zu verschieben, wenn von einer Steuerung 4 ein Ausschleussignal abgegeben wird.

Weiterhin sind Marken 9b, 9c, 9d vorgesehen. Diese werden von einem Trackingsystem verwendet, um Position und Ausrichtung und ggf. Objekte kontinuierlich zu erfassen und zu identifizieren. Die Marke 9b ist auf dem Paket 1e vorgesehen. Anhand dieser Marke kann das Paket identifiziert und verfolgt werden. Weiterhin sind am statischen Teil des Ausschleusers 1d eine Bezugsmarke 9d und am beweglichen Teil des Ausschleusers 1d eine Marke 9c für die Verfolgung der Bewegung des beweglichen Teils des Ausschleusers vorgesehen.

Durch die beiden Pfeile auf den Laufbändern 1b und 1c ist angedeutet, dass ein auf dem Laufband 1b befördertes Paket entweder auf dem Laufband 1b verbleibt oder - wenn ein Ausschleussignal vorliegt - auf das Laufband 1c verschoben wird.

Das vom Sensor 1f abgegebene Sensorsignal wird der Sensorik 2 zugeführt. Ein vom Ausschleuser 1d, bei dem es sich um einen Aktor handelt, abgeleitetes Signal wird der Aktorik 3 zugeführt.

Die Sensorik 2 und die Aktorik 3 stehen jeweils mit einem Signalerfassungssystem 6 in Verbindung. Dieses ist dazu vorgesehen, die an der Sensorik 2 und an der Aktorik 3 anliegenden Signale, bei denen es sich um Daten handelt, die steuerungsrelevanten Signalen entsprechen, zu Zeitpunkten, die von den Taktsignalen eines Synchronisationstaktgebers 8 vorgegeben werden, an einen Signalspeicher 7 weiterzuleiten.

Alternativ dazu können die an der Sensorik 2 und an der Aktorik 3 anliegenden Signale auch aus einer Steuerung 4 und/oder einem Rechner 5 ausgegeben und von dort aus über das Signalerfassungssystem 6 an den Signalspeicher 7 weitergeleitet werden.

Im Signalerfassungssystem 6 ist definiert, von welchen Signalquellen Signale zu erfassen sind. Ein konkretes Signal wird durch eine Wert- bzw. Zustandsänderung erzeugt. Dies kann auch das Auftreten eines Alarms oder einer Nachricht sein. Die Erfassung kann - wie bereits vorstehend beschrieben wurde - direkt an der Sensorik 2 und an der Aktorik 3 erfolgen, aber auch in der Steuerung 4 oder in dem Rechner 5. Arbeitet die Steuerung zyklisch, so kann eine Signalquelle auch der Zykluswechsel sein, da er den Zeithorizont der Steuerung vorgibt.

Die Steuerung 4 und der Rechner 5 haben die Aufgabe, die in der Anlage auftretenden verschiedenen Bewegungen und bestehende zeitliche Vorgaben in Einklang zu bringen. Dazu gehören die Geschwindigkeit des Paketes 1e und die Zeit, die das Paket 1e benötigt, um vom Sensor 1f zum Ausschleuser 1d zu gelangen. Dazu gehört auch die Reaktionszeit der Steuerung 4 für die Entscheidung, ob das Paket 1e auszuschleusen ist oder nicht. Ferner gehört dazu auch die Reaktionszeit des Rechners 5, falls das Wissen über den einzuschlagenden Weg des Pakets 1f nicht in der Steuerung 4, sondern im Rechner 5 vorliegt.

Weiterhin ist in der Figur 1 ein Trackingsystem 9 gezeigt, das zur Erfassung von bewegten Objekten im Raum vorgesehen ist. Dieses Trackingsystem steht beim gezeigten Ausführungsbeispiel mit einem Trackingsensor 9a in Verbindung, der auf dem Helm eines Anwenders platziert ist. Der Anwender trägt weiterhin eine Brille als Wiedergabeeinheit 15. Der Trackingsensor 9a dient zur Erfassung der Position und der Ausrichtung der auf dem Paket 1e vorgesehenen Marke 9b.

Bei dieser Marke 9b kann es sich um eine passive Marke, beispielsweise um ein Schwarz-Weiß-Muster, oder um eine aktive Marke, beispielsweise einen Radiosender, handeln. Alternativ dazu kann es sich bei der Marke 9b beim Vorliegen eines feature-basierten Trackingsystems auch um eine Marke handeln, die über die Geometrie- und Oberflächeneigenschaften des jeweiligen Objektes definiert ist. In diesem Fall repräsentiert das Objekt selbst die Marke.

Da beim gezeigten Ausführungsbeispiel der Trackingsensor 9a nicht fest im Raum installiert ist, sondern auf dem Helm des Anwenders, ist eine weitere Marke 9d vorgesehen. Diese ist am stationären Teil des Ausschleusers 1d angebracht und dient als Bezugsmarke bzw. als geometrischer Bezugspunkt für alle anderen Marken. Die Marke 9d ermöglicht es auch, die aktuelle Position und Ausrichtung des Anwenders zu ermitteln.

Alternativ zum gezeigten Ausführungsbeispiel können auch hybride Trackingsysteme verwendet werden, die verschiedene Trackingverfahren kombinieren, um eine höhere Messgenauigkeit zu erzielen.

Die vom Trackingsystem erfassten Daten, bei denen es sich um Daten handelt, die Bewegungsvorgänge beschreiben, werden an einen Bewegungsspeicher 10 weitergegeben und dort abgespeichert. Eine zeitgleiche Erfassung und Abspeicherung der Daten, die Bewegungsvorgänge beschreiben, und der Daten, die steuerungsrelevanten Signalen entsprechen, wird dadurch sichergestellt, dass die vom Synchronisationstaktgeber 8 bereitgestellten Taktsignale nicht nur dem Signalspeicher 7, sondern auch dem Signalerfassungssystem 6, dem Trackingsystem 9 und dem Bewegungsspeicher 10 zugeführt werden.

Der Signalspeicher 7 und der Bewegungsspeicher 10 stehen ausgangsseitig mit einer Auswerteeinheit 11 in Verbindung. Diese bereitet die abgespeicherten Daten, die Bewegungsvorgänge beschreiben, und die abgespeicherten Daten, die steuerungsrelevanten Signalen entsprechen, derart graphisch auf, dass sie in räumlichen und zeitlichen Zusammenhang gebracht werden. Dies ist Vorraussetzung dafür, dass die erfassten Bewegungen und Steuerungsereignisse in einem der Auswerteeinheit 11 nachgeschalteten Modellbildner 12 als graphisches dreidimensionales Modell derart umgesetzt werden können, dass sie mit Hilfe eines Augmented-Reality-Systems in das Sichtfeld des Anwenders oder in eine aufgezeichnete Videosequenz eingeblendet werden können.

Augmented-Reality-Systeme werden dazu verwendet, um direkt in das Sichtfeld eines Anwenders, der eine Brille als Wiedergabevorrichtung trägt, Einblendungen von Informationen mit räumlichem Bezug vorzunehmen. Diese Systeme können als Optical-See-Through-System oder als Video-See-Through-System ausgebildet sein. Bei Video-See-Through-Systemen ist nicht Vorraussetzung, dass eine vorgenommene Einblendung direkt in das Sichtfeld des Anwenders erfolgt. Die Einblendung kann auch auf einer separaten Anzeigeeinheit erfolgen, beispielsweise auf dem Bildschirm eines Tablett-PCs.

Dem in der Figur 1 gezeigten Augmented-Reality-System gehören der Trackingsensor 9a, das Trackingsystem 9, der Modellbildner 12, eine Einheit 13 zur Aufbereitung des vom Modellbildner 12 gelieferten dreidimensionalen Modells und ggf. eine Videokarte 14 an.

Erfolgt die Einblendung der aufbereiteten Daten direkt in das Sichtfeld des Anwenders, so wird mindestens die Marke 9d dazu verwendet, die Position und die Ausrichtung des Anwenders zu ermitteln. Dies ist notwendig, damit die Bildaufbereitungseinheit 13 das ihr zugeführte dreidimensionale Modell exakt derart aufbereitet, dass es als echte Überlagerung der Realität vom Anwender wahrgenommen wird.

Welches konkrete Verfahren vom Trackingsystem 9 verwendet wird, ist nicht wesentlich. Wichtig ist lediglich, dass das verwendete Trackingverfahren dazu in der Lage ist, die notwendigen Bewegungsvorgänge im Raum, d. h. die Positionen und Ausrichtungen, korrekt zu erfassen und im Bewegungsspeicher 10 zu hinterlegen.

An das verwendete Augmented-Reality-System 9, 9a, 12, 13, 14, 15 besteht die Anforderung, dass es der Auswerteeinheit 11 ermöglicht, das berechnete dreidimensionale Modell in das Augmented-Reality-System einzubringen bzw. das jeweils bereits vorhandene dreidimensionale Modell zu modifizieren, so dass die Einblendung in das Sichtfeld des Anwenders bzw. in die Videosequenz korrekt erfolgt.

Der Bewegungsspeicher 10 besitzt die Eigenschaft, ein oder mehrere Bewegungsvorgänge zu speichern und mit einem Zeitstempel zu versehen. Neben dem Zeitstempel wird jedem Bewegungsvorgang weiterhin eine Positionsangabe und eine Angabe zur Ausrichtung im Raum zugeordnet. Jeder Bewegungsvorgang ist einem definierten Objekt bzw. einer zugehörigen Marke, beispielsweise der Marke 9b oder der Marke 9c, zugeordnet. Der Zeitstempel wird aus der Zeitvorgabe des vom Synchronisationstaktgeber 8 gelieferten Taktsignals, einer internen Zeitinterpolation zwischen zwei Taktsignalen und einem Zeitkorrekturfaktor berechnet, der die Zeitverzögerung des Trackingsystems 9 zum Gesamtsystem korrigiert.

Alternativ dazu kann das System auch derart ausgelegt werden, dass die Vergabe des Zeitstempels nicht im Bewegungsspeicher 10, sondern direkt im Trackingsystem 9 vorgenommen wird. Auch in diesem Fall wird der Zeitstempel aus der Zeitvorgabe des vom Synchronisationstaktgeber 8 gelieferten Taktsignals, einer internen Zeitinterpolation zwischen zwei Taktsignalen und einem Zeitkorrekturfaktor berechnet, der die Zeitverzögerung des Trackingsystems zum Gesamtsystem korrigiert.

Welche Bewegungsvorgänge konkret aufzuzeichnen sind, wird dem System vom Anwender vorgegeben. Auch der Aufzeichnungsbeginn und die Aufzeichnungsdauer werden vom Anwender festgelegt.

Die Erfassung der steuerungsrelevanten Signale erfolgt, wie bereits oben ausgeführt wurde, mittels des Signalerfassungssystems 6. In diesem ist definiert, von welchen Signalquellen Signale zu erfassen sind. Ein konkretes Signal wird durch eine Wert- bzw. Zustandsänderung erzeugt. Dies kann auch das Auftreten eines Alarms oder einer Nachricht sein. Die Erfassung kann, wie ebenfalls bereits oben ausgeführt wurde, an einer Sensorik 2, einer Aktorik 3, einer Steuerung 4 oder einem Rechner 5 erfolgen. Arbeitet die Steuerung zyklisch, dann kann eine Signalquelle auch der Zykluswechsel sein, da er den Zeithorizont der Steuerung vorgibt.

Der Signalspeicher 7 besitzt die Eigenschaft, ein oder mehrere erfasste Signale zu speichern und mit einem zweiten Zeitstempel zu versehen. Jedes Signal wird einer definierten Signalquelle zugeordnet. Der zweite Zeitstempel wird ebenfalls aus der Zeitvorgabe des vom Synchronisationstaktgeber 8 gelieferten Taktsignals, einer internen Zeitinterpolation zwischen zwei Taktsignalen und einem Zeitkorrekturfaktor berechnet, der die Zeitverzögerung der Signalerfassung zum Gesamtsystem korrigiert. Da die Signalerfassung von unterschiedlichen Quellen erfolgen kann, kann für jede Quelle ein eigener Zeitkorrekturfaktor vorgegeben werden.

Welche Signalquellen zu betrachten sind, wird dem System vom Anwender vorgegeben. Auch der Aufzeichnungsbeginn und die Aufzeichnungsdauer werden vom Anwender festgelegt.

Alternativ dazu kann das System auch derart ausgelegt werden, dass die Vergabe des Zeitstempels nicht im Signalspeicher 7 erfolgt, sondern im Signalerfassungssystem 6. Auch in diesem Fall wird der Zeitstempel aus der Zeitvorgabe des vom Synchronisationstaktgeber 8 gelieferten Taktsignals, einer internen Zeitinterpolation zwischen zwei Taktsignalen und einem oder mehreren quellspezifischen Zeitkorrekturfaktoren berechnet, die die Zeitverzögerung der Signalerfassung zum Gesamtsystem korrigieren.

Jeder Bewegungsvorgang wird einem Objekt zugeordnet. Jedes Objekt repräsentiert eine Raum-Zeit-Achse, die im dreidimensionalen Modell dargestellt wird. Die räumliche Ausprägung der Zeitachse ist über die ihr zugeordneten Bewegungsvorgänge definiert, insbesondere über die Positions- und Ausrichtungswerte. Die Raum-Zeit-Achse wird beispielsweise in Form einer Polylinie mit Richtungspfeilen dargestellt, wobei sich die Stützpunkte der Polylinie direkt aus den Positionswerten der Bewegungsvorgänge ableiten lassen. Werden weitere Stützpunkte benötigt, können diese durch eine Interpolation berechnet werden. Die Raum-Zeit-Achse wird vorzugsweise zusammen mit einem Text, der das Objekt bezeichnet, angezeigt.

Gemäß einer vorteilhaften Weiterbildung erlaubt die Auswerteeinheit 11 dem Anwender eine Definition von periodischen Zeitintervallen und eine Zuordnung dieser Zeitintervalle zu einem Objekt bzw. der zugehörigen Raum-Zeit-Achse. Die Auswerteeinheit 11 setzt diese Informationen derart um, dass die Zeitintervalle als Linien senkrecht zur Zeitachse eingeblendet werden. Ergänzend kann zu jeder Linie auch ein Text eingeblendet werden, der die dazugehörige Zeitangabe anzeigt. Über eine definierbare Zeitkonstante kann eine Verschiebung der Intervallanzeige auf der Raum-Zeit-Achse erfolgen.

Ein definiertes Zeitintervall kann beispielsweise auch zur Einblendung der Zykluszeit verwendet werden, falls diese bekannt ist. Dann muss die Zykluszeit der Steuerung nicht vom Signalerfassungssystem aufgezeichnet werden.

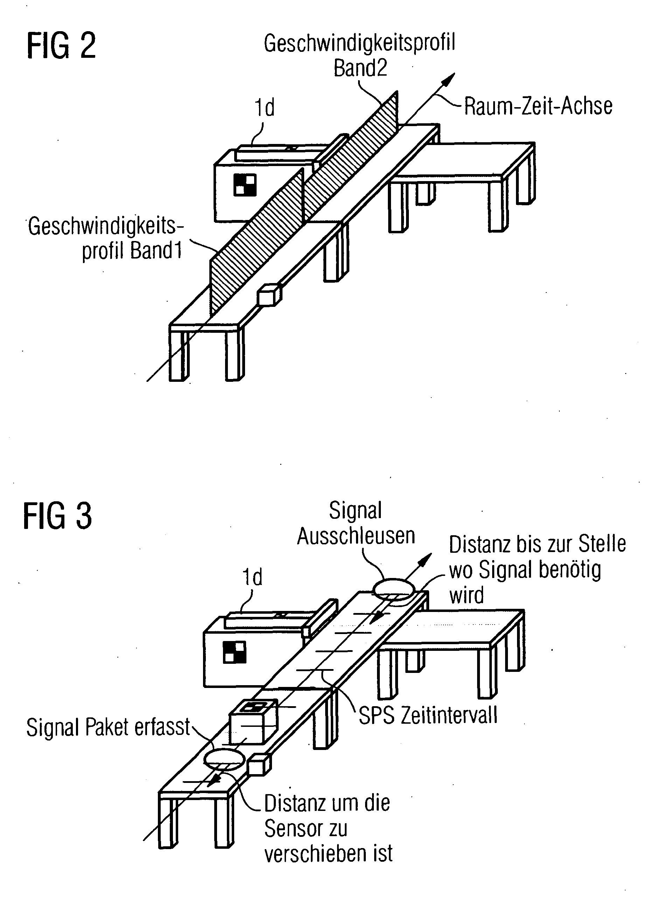

Weiterhin kann für ein Objekt bzw. eine Raum-Zeit-Achse definiert werden, dass auch die Beschleunigung bzw. die Geschwindigkeit aus den erfassten Objekten abzuleiten ist und zur Raum-Zeit-Achse aufgetragen wird. Die Beschleunigung und/oder die Geschwindigkeit kann beispielsweise mit Hilfe eines Bandes dargestellt werden, dessen Höhe vom Wert der Geschwindigkeit bzw. dem Wert der Beschleunigung bei einem Bewegungsvorgang bzw. zwischen zwei Bewegungsvorgängen abhängt. Die mittlere Geschwindigkeit zwischen zwei Bewegungsvorgängen bzw. Stützpunkten ergibt sich durch den Abstand der Stützpunkte zueinander dividiert durch die absolute Zeitdifferenz zwischen den Stützpunkten. Der mittlere Beschleunigungswert an einem Stützpunkt ergibt sich aus der Differenz der mittleren Geschwindigkeit zu seinem Vorgänger- und Nachfolgerstützpunkt. Ein Beispiel für eine Darstellung von derartigen Geschwindigkeitsprofilen ist in der Figur 2 gezeigt.

Die Auswerteeinheit 11 erlaubt auch eine Zuordnung von Signalquellen oder einzelnen Signalen zu Objekten bzw. Raum-Zeit-Achsen. Wurde eine Signalquelle zugeordnet, dann werden alle zugehörigen Signale dieser Signalquelle dem Objekt zugeordnet. Für jedes zugeordnete Signal wird anhand des Zeitstempels ermittelt, zwischen bzw. auf welchen Bewegungsvorgängen das Signal zeitlich lag. Dessen genaue Position auf der Raum-Zeit-Achse kann dann mittels einer Interpolation berechnet werden. Die Anzeige des Signals erfolgt beispielsweise als größenveränderliche Kreisscheibe, die senkrecht zur Raum-Zeit-Achse liegt, ergänzt um einen Text, der den Bezeichner des Signals anzeigt. Ein Beispiel für eine derartige Darstellung ist in der Figur 3 gezeigt.

Ein Signal kann mehr als einem Objekt bzw. mehr als einer Raum-Zeit-Achse gleichzeitig zugeordnet sein. Dadurch wird dieses mehrfach auf jeweils unterschiedlichen Raum-Zeit-Achsen dargestellt. Dadurch können Abhängigkeiten zwischen Bewegungen sichtbar dargestellt werden.

Die Auswerteeinheit 11 besitzt zusätzlich die Eigenschaft, die Zeitstempel ausgewählter Signale um einen gemeinsamen definierten Wert kontinuierlich verändern zu können. Dies wirkt sich direkt auf die Anzeige der Signale auf der Raum-Zeit-Achse aus. Die Signale werden entlang der Raum-Zeit-Achse verschoben. Damit kann beispielsweise die optimale Position des Sensors 1f ermittelt werden. Vom System wurden die Signale des Sensors 1f und das Vorliegen der Ausschleusentscheidung in der Steuerung 4 registriert. Diese Signale werden durch die Zuordnung zum Objekt, welches durch die Marke 9b definiert ist, zur Anzeige auf der dazugehörigen Raum-Zeit-Achse gebracht. Liegt das Signal der Ausschleusentscheidung hinter dem Ausschleuser, so muss der Sensor 1f verschoben werden. Der Zeitstempel der Ausschleusentscheidung wird nun solange kontinuierlich verändert, bis die Anzeige des Signals auf der Höhe des Ausschleusers zum Liegen kommt. Da auch das Sensorsignal als zu verschieben ausgewählt worden ist, befindet es sich jetzt an der Stelle, wo der Sensor zu positionieren ist, um das Entscheidungssignal rechtzeitig vorliegen zu haben. Bei diesem Vorgang wird vorzugsweise auch die angezeigte Zykluszeit der Steuerung berücksichtigt. Durch Interpolation können auch Stützpunkte für eine Raum-Zeit-Achse berechnet werden, die hinter oder vor dem letzten aufgezeichneten Bewegungsvorgang liegen.

Die Auswerteeinheit 11 besitzt vorzugsweise zusätzlich die Eigenschaft, dass der Benutzer eine beliebige Raum-Zeit-Achse definieren kann. Diese Raum-Zeit-Achse wird wie bei einem Objekt über einen Satz von Bewegungsvorgängen definiert, wobei diese Bewegungsvorgänge vom Anwender vorgegeben werden.

## Patentansprüche

1. Verfahren zur Erleichterung der Einstellung von Systemen, bei welchen Objekte (1e) bewegt werden, mit folgenden Schritten:
- zeitgleiche Erfassung und Abspeicherung von Daten, die Bewegungsvorgänge beschreiben, und Daten, die steuerungsrelevanten Signalen entsprechen, wobei die Daten, die Bewegungsvorgänge beschreiben; mittels eines Trackingsystems (9) erfasst werden und Daten, die steuerungsrelevanten Signalen entsprechen, mittels eines Signalerfassungssystems (6) von einem Sensor (2), einem Aktor (3), einer Steuerung (4) oder einem Rechner (5) abgeleitet werden, wobei
- die abgespeicherten Daten, die Bewegungsvorgänge beschreiben, mit einem ersten Zeitstempel, einer Positionsangabe und einer Angabe zur Ausrichtung versehen werden und
- die Daten, die steuerungsrelevanten Signalen entsprechen, mit einem zweiten Zeitstempel versehen werden,
- Aufbereitung der abgespeicherten Daten, um die abgespeicherten Daten, die Bewegungsvorgänge beschreiben, mit den abgespeicherten Daten, die steuerungsrelevanten Signalen entsprechen, in räumlichen und zeitlichen Zusammenhang zu bringen, und
- Einblendung der aufbereiteten Daten mittels der Augmented-Reality-Technik in das Sichtfeld eines Anwenders oder in eine aufgezeichnete Videosequenz,
**dadurch gekennzeichnet,**
**dass** die Zeitstempel ausgewählter Signale verändert werden.

2. Verfahren nach Anspruch 1, **dadurch gekennzeichnet, dass** das Trackingsystem (9) die Position und die Ausrichtung mindestens einer Marke (9b) an einem bewegten Objekt (1e) erfasst.

3. Verfahren nach Anspruch 1 oder 2, **dadurch gekennzeichnet, dass** das Trackingsystem (9) mindestens eine Marke (9d) verwendet, um die Position und Ausrichtung eines Anwenders zu ermitteln.

4. verfahren nach einem der vorhergehenden Ansprüche, **dadurch gekennzeichnet , dass** der erste Zeitstempel aus der Zeitvorgabe eines Synchronisationstaktes, einer Zeitinterpolation und einem Zeitkorrekturfaktor ermittelt wird.

5. Verfahren nach einem der vorhergehenden Ansprüche, **dadurch gekennzeichnet, dass** die abgespeicherten Daten in einem Bewegungsspeicher (10) mit dem ersten Zeitstempel versehen werden.

6. Verfahren nach einem der Ansprüche 1 bis 4, **dadurch gekennzeichnet, dass** die abgespeicherten Daten im Trackingsystem (9) mit dem ersten Zeitstempel versehen werden.

7. Verfahren nach einem der vorhergehenden Ansprüche, **dadurch gekennzeichnet, dass** die Daten, die steuerungsrelevanten Signalen entsprechen, jeweils einer bestimmten Signalquelle zugeordnet werden.

8. Verfahren nach einem der vorhergehenden Ansprüche, **dadurch gekennzeichnet, dass** der zweite Zeitstempel aus der Zeitvorgabe eines Synchronisationstaktes, einer Zeitinterpolation und einem Zeitkorrekturfaktor ermittelt wird.

9. Verfahren nach einem der vorhergehenden Ansprüche, **dadurch gekennzeichnet , dass** für jede Signalquelle ein eigener Zeitkorrekturfaktor vorgegeben wird.

10. Verfahren nach den Ansprüchen 1 bis 9, **dadurch gekennzeichnet , dass** die Daten, die steuerungsrelevanten Signalen entsprechen, in einem Signalspeicher (7) mit dem zweiten Signalstempel versehen werden.

11. Verfahren nach einem der Ansprüche 1 bis 9, **dadurch gekennzeichnet , dass** die Daten; die steuerungsrelevanten Signalen entsprechen, im Signalerfassungssystem (6) mit dem zweiten Signalstempel versehen werden.

12. Verfahren nach einem der vorhergehenden Ansprüche, **dadurch gekennzeichnet, dass** die aufbereiteten Daten in Form eines dreidimensionalen Modells zur Verfügung gestellt werden.

13. Verfahren nach Anspruch 12, **dadurch gekennzeichnet, dass** das dreidimensionale Modell für jedes Objekt eine Raum-Zeit-Achse aufweist.

14. Verfahren nach Anspruch 12 oder 13, **dadurch gekennzeichnet, dass** jedem Objekt ein periodisches Zeitintervall zugeordnet wird, welches auf der Raum-Zeit-Achse graphisch eingeblendet wird.

15. Verfahren nach einem der Ansprüche 12 - 14, **dadurch gekennzeichnet, dass** für jedes Objekt die Bewegungsgeschwindigkeit oder die Beschleunigung ermittelt und im dreidimensionalen Modell eine Information über die ermittelte Bewegungsgeschwindigkeit oder die ermittelte Beschleunigung dargestellt wird.

16. Verfahren nach einem der Ansprüche 13 - 15, **dadurch gekennzeichnet, dass** für jedes Objekt entlang der Raum-Zeit-Achse Ereignisse graphisch und/oder alphanumerisch dargestellt werden.

17. Vorrichtung eingerichtet zur Durchführung des Verfahrens nach einem der vorhergehenden Ansprüche, mit.
- einem Signalerfassungssystem (6) eingerichtet zur Erfassung von Daten, die steuerungsrelevanten Signalen entsprechen,
- einem Sensor (2), einem Aktor (3), einer Steuerung (4) oder einem Rechner (5), von welchem bzw. welcher das Signalerfassungssystem (6) die Daten, die steuerungsrelevanten Signalen entsprechen, ableitet,
- einem Signalspeicher (7) eingerichtet zur Aufzeichnung der mittels des Signalerfassungssystems erfassten Daten,
- einem Trackingsystem (9) eingerichtet zur Erfassung von Daten, die Bewegungsvorgänge beschreiben,
- einem Bewegungsspeicher (10) eingerichtet zur Aufzeichnung der mittels des Trackingsystems erfassten Daten,
- Mitteln (9,10), die die abgespeicherten Daten, die Bewegungsvorgänge beschreiben, mit einem ersten Zeitstempel, einer Positionsangabe und einer Angabe zur Ausrichtung versehen,
- Mitteln (7), die die Daten, die steuerungsrelevanten Signalen entsprechen, mit einem zweiten Zeitstempel versehen,
- einer Auswerteeinheit (11) eingerichtet zur graphischen Aufbereitung der abgespeicherten Daten, um die abgespeicherten Daten, die Bewegungsvorgänge beschreiben, mit den abgespeicherten Daten, die steuerungsrelevanten Signalen entsprechen, in räumlichen und zeitlichen Zusammenhang zu bringen, und
- einem Augmented-Reality-System (9, 9a, 12, 13,14,15) eingerichtet zur Einblendung der von der Auswerteeinheit (11) aufbereiteten Daten in das Sichtfeld des Anwenders oder in eine aufgezeichnete Videosequenz,
**dadurch gekennzeichnet**
**dass** sie des Weiteren Mittel (11) eingerichtet zur Veränderung des Zeitstempels ausgewählter Signale aufweist.

18. Vorrichtung nach Anspruch 17, mit
- einem Synchronisationstaktgeber (8) eingerichtet zur Bereitstellung von Synchronisationstaktsignalen.

## Claims

1. Method for facilitating the setting of systems in which objects (1e) are moved, with the following steps:
- Simultaneous detection and storage of data describing movement processes and data corresponding to control-relevant signals, with the data that describes movement processes being detected by means of a tracking system (9) and data that corresponds to control-relevant signals (6) being derived by, means of a signal detection system (6) from a sensor (2), an actuator (3), a controller (4) or a computer (5),
- Editing of the stored data, in order to establish a time and space relationship between the stored data describing movement processes and the stored data corresponding to control-relevant signals, and
- Showing the edited data by means of augmented reality technology in the field of view of a user or in a recorded video sequence, with
- the stored data which describes movement processes being provided with a first time stamp, a position specification and a specification for orientation and
- the data which corresponds to control-relevant signals being provided with a second time stamp,
**characterised in that,**
the time stamps of selected signals are modified.

2. Method in accordance with claim 1, **characterised in that** the tracking system (9) records the position and the orientation of at least one mark (9b) on a moved object (1e).

3. Method in accordance with claim 1 or 2,
**characterized in that** the tracking system (9) uses at least one mark (9d) to determine the position and orientation of a user.

4. Method in accordance with one of the previous claims, **characterised in that** the first time stamp is determined from a time specification of a synchronisation clock, a time interpolation and a time correction factor.

5. Method in accordance with one of the previous claims, **characterized in that** the stored data is provided (10) with the first time stamp in a movement memory.

6. Method in accordance with one of the claims 1 to 4, **characterised in that** the stored data (9) is provided with the first time stamp in the tracking system.

7. Method in accordance with one of the previous claims, **characterised in that** the data which corresponds to the control-relevant signal is assigned to a specific signal source in each case.

8. Method in accordance with one of the previous claims, **characterised in that** the second time stamp is determined from a time specification of a synchronization clock, a time interpolation and a time correction factor.

9. Method in accordance with one of the previous claims, **characterised in that** a separate time correction factor is specified for each signal source.

10. Method according to claims 1 to 9, **characterised in that** the data corresponding to control-relevant signals is provided with the second signal stamp in a signal memory (7).

11. Method in accordance with one of claims 1 to 9, **characterised in that** the data corresponding to control-relevant signals is provided with the second signal stamp in the signal detection system (6).

12. Method in accordance with one of the previous claims, **characterized in that,** the edited data is made available in the form of a three-dimensional model.

13. The method in accordance with claim 12, **characterized in that** the three-dimensional model has a space-time axis for each object.

14. The method as claimed in claim 12 or 13, **characterized in that** each object is assigned a periodic time interval which is shown graphically on the space-time axis.

15. Method in accordance with one of the claims 12 - 14, **characterized in that,** for each object the speed of movement or the acceleration is determined and information is shown in the three-dimensional model about the speed of movement or about the acceleration determined.

16. Method in accordance with one of the claims 13 - 15, **characterised in that** events are shown graphically and/or alphanumerically for each object along the space-time axis.

17. A device configured for executing the method as claimed in one of the previous claims with
- a signal detection system (6) configured for detecting data corresponding to control-relevant signals.
- a sensor (2), an actuator (3), a control (4) or a computer (5), from which the signal detection system (6) derives the data corresponding to the control-relevant signals,
- a signal memory (7) configured for recording the data recorded by means of the signal detection system,
- a tracking system (9) configured for detecting data which describes movement processes,
- a movement memory (10) configured for recording the data detected by means of the tracking system,
- an evaluation unit (11) configured for graphic editing of the stored data, in order to establish a space and time relationship between the stored data that describes movement processes and the stored data corresponding to control-relevant signals, and
- an augmented-reality system (9, 9a, 12, 13, 14, 15) configured for showing the data edited by the evaluation unit (11) in the field of view of the user or in a recorded video sequence,
- means (9, 10) which provide the stored data that describes movement processes with a first time stamp, a position specification and a specification for orientation,
- means (7) which provide the data corresponding to control-relevant signals with a second time stamp,
**characterised in that,**
it also features means (11) configured for changing the time stamp of selected signals.

18. The device as claimed in claim 17, with
- a synchronisation clock (8) configured for provision of synchronisation clock signals.

## Revendications

1. Procédé pour faciliter le réglage de systèmes dans lesquels des objets ( 1e ) sont déplacés, ayant les étapes suivantes :
- acquisition et mémorisation isochrones de données qui décrivent des mouvements et de données qui correspondent à des signaux déterminants pour la commande, les données qui décrivent des mouvements étant acquises au moyen d'un système de poursuite ( 9 ) et des données qui correspondent à des signaux déterminants pour la commande étant déduites d'un capteur ( 2 ), d'un actionneur ( 3 ), d'une commande ( 4 ) ou d'un ordinateur ( 5 ) au moyen d'un système d'acquisition de signaux ( 6 ),
les données mémorisées qui décrivent des mouvements étant munies d'un premier timbre horodateur, d'une indication de position et d'une indication pour l'orientation et
les données qui correspondent à des signaux déterminants pour la commande étant munies d'un deuxième timbre horodateur,
- préparation des données mémorisées pour mettre en rapport spatial et temporel les données mémorisées qui décrivent des mouvements et les données mémorisées qui correspondent à des signaux déterminants pour la commande, et
- insertion des données préparées, au moyen de la technique de réalité augmentée, dans le champ visuel d'un utilisateur ou dans une séquence vidéo enregistrée,
**caractérisé par le fait que** les timbres horodateurs de signaux sélectionnés sont modifiés.

2. Procédé selon la revendication 1, **caractérisé par le fait que** le système de poursuite ( 9 ) acquiert la position et l'orientation au moins d'un repère ( 9b ) sur un objet déplacé ( 1e ) .

3. Procédé selon la revendication 1 ou 2, **caractérisé par le fait que** le système de poursuite ( 9 ) utilise au moins un repère ( 9d ) pour déterminer la position et l'orientation d'un utilisateur.

4. Procédé selon l'une des revendications précédentes, **caractérisé par le fait que** le premier timbre horodateur est déterminé à partir de la prescription temporelle d'une horloge de synchronisation, d'une interpolation temporelle et d'un facteur de correction temporelle.

5. Procédé selon l'une des revendications précédentes, **caractérisé par le fait que**, dans une mémoire de mouvements ( 10 ), les données mémorisées sont munies du premier timbre horodateur.

6. Procédé selon l'une des revendications 1 à 4, **caractérisé par le fait que**, dans le système de poursuite ( 9 ), les données mémorisées sont munies du premier timbre horodateur.

7. Procédé selon l'une des revendications précédentes, **caractérisé par le fait que** les données qui correspondent à des signaux déterminants pour la commande sont associées à chaque fois à une certaine source de signal.

8. Procédé selon l'une des revendications précédentes, **caractérisé par le fait que** le deuxième timbre horodateur est déterminé à partir de la prescription temporelle d'une horloge de synchronisation, d'une interpolation temporelle et d'un facteur de correction temporelle.

9. Procédé selon l'une des revendications précédentes, **caractérisé par le fait que**, pour chaque source de signal, un facteur de correction temporelle particulier est prescrit.

10. Procédé selon l'une des revendications 1 à 9, **caractérisé par le fait que**, dans une mémoire de signaux ( 7 ), les données qui correspondent à des signaux déterminants pour la commande sont munies du deuxième timbre horodateur.

11. Procédé selon l'une des revendications 1 à 9, **caractérisé par le fait que**, dans le système d'acquisition de signaux ( 6 ), les données qui correspondent à des signaux déterminants pour la commande sont munies du deuxième timbre horodateur.

12. Procédé selon l'une des revendications précédentes, **caractérisé par le fait que** les données préparées sont mises à disposition sous la forme d'un modèle tridimensionnel.

13. Procédé selon la revendication 12, **caractérisé par le fait que** le modèle tridimensionnel pour chaque objet comporte un axe espace-temps.

14. Procédé selon la revendication 12 ou 13, **caractérisé par le fait qu'**il est associé à chaque objet un intervalle de temps périodique qui est inséré graphiquement sur l'axe espace-temps.

15. Procédé selon l'une des revendications 12 à 14, **caractérisé par le fait que**, pour chaque objet, la vitesse de mouvement ou l'accélération est déterminée et que, dans le modèle tridimensionnel, une information concernant la vitesse de mouvement déterminée ou l'accélération déterminée est représentée.

16. Procédé selon l'une des revendications 13 à 15, **caractérisé par le fait que**, pour chaque objet, des événements sont représentés sous forme graphique et/ou alphanumérique le long de l'axe espace-temps.

17. Dispositif conçu pour la mise en oeuvre du procédé selon l'une des revendications précédentes, ayant :
- un système d'acquisition de signaux ( 6 ) conçu pour l'acquisition de données qui correspondent à des signaux déterminants pour la commande,
- un capteur ( 2 ), un actionneur ( 3 ), une commande ( 4 ) ou un ordinateur ( 5 ) duquel ou de laquelle le système d'acquisition de signaux ( 6 ) déduit les données qui correspondent à des signaux déterminants pour la commande,
- une mémoire de signaux ( 7 ) conçue pour l'enregistrement des données acquises au moyen du système d'acquisition de signaux,
- un système de poursuite ( 9 ) conçu pour l'acquisition de données qui décrivent des mouvements,
- une mémoire de mouvements ( 10 ) conçue pour l'enregistrement des données acquises au moyen du système de poursuite,
- des moyens ( 9, 10 ) qui munissent les données mémorisées qui décrivent des mouvements d'un premier timbre horodateur, d'une indication de position et d'une indication pour l'orientation,
- des moyens ( 7 ) qui munissent les données qui correspondent à des signaux déterminants pour la commande d'un deuxième timbre horodateur,
- une unité d'évaluation ( 11 ) conçue pour la préparation graphique des données mémorisées afin de mettre en rapport spatial et temporel les données mémorisées qui décrivent des mouvements et les données mémorisées qui correspondent à des signaux déterminants pour la commande et
- un système de réalité augmentée ( 9, 9a, 12, 13, 14, 15 ) conçu pour l'insertion des données préparées par l'unité d'évaluation ( 11 ) dans le champ visuel de l'utilisateur ou dans une séquence vidéo enregistrée, **caractérisé par le fait qu'**il comporte aussi des moyens ( 11 ) conçus pour modifier le timbre horodateur de signaux sélectionnés.

18. Dispositif selon la revendication 17, ayant :
- un générateur d'horloge de synchronisation ( 8 ) conçu pour mettre à disposition des signaux d'horloge de synchronisation.
